# EUROPÄISCHE PATENTANMELDUNG

(11) **EP 0 707 158 A2**
(43) Veröffentlichungstag der Anmeldung: **17.04.1996**
(21) Anmeldenummer: 95115620.7
(22) Anmeldetag: 04.10.1995
(51) Int. Cl.: F16C 11/06

(54) **Kugelgelenk für Fahrwerksteile in Kraftfahrzeugen**

(30) Priorität: 12.10.1994 DE 4436428
(71) Anmelder: LEMFÖRDER METALLWAREN AG., D-49441 Lemförde (DE)
(72) Erfinder: Nordloh, Alfons, D-49429 Visbek (DE); Grube, Volker, D-49356 Diepholz (DE)
(74) Vertreter: Bruse, Willy Hans Heinrich

(57) **Zusammenfassung**

Die Erfindung bezieht sich auf ein Kugelgelenk für Fahrwerksteile in Kraftfahrzeugen, bei dem eine an einem Gelenkzapfen (1) ausgebildete Gelenkkugel (2) innerhalb eines Gehäuses (3) in einer Gleitschale (4) aus Kunststoff gelagert ist, wobei der Außenmantel der Gleitschale (4) von dem Innenmantel des Gehäuses (3) eng umschlossen wird. Zum Ausgleich von Fertigungstoleranzen ist am Außenmantel der Gleitschale (4) wenigstens an Stellen erhöhter Belastung durch die Gelenkkugel (2) ein gegenüber dem Werkstoff der Gleitschale (4) hochelastischer Werkstoff (7) in einer Ausnehmung angeordnet.

## Beschreibung

Die Erfindung bezieht sich auf ein Kugelgelenk für Fahrwerksteile in Kraftfahrzeugen, bei dem eine an einem Gelenkzapfen ausgebildete Gelenkkugel innerhalb eines Gehäuses in einer Gleitschale aus Kunststoff gelagert ist, deren Außenmantel das Gehäuse mit einem Innenmantel eng umschließt und Ausnehmungen aufweist.

Ein Kugelgelenk mit diesen Merkmalen ist aus DE 38 28 683 - C2- bekannt. An der inneren Gleitfläche der Gleitschale sind bei dem bekannten Kugelgelenk mit Schmiermittel gefüllte Nuten und im Bereich dieser Nuten am Außenmantel der Gleitschale flache Ausnehmungen vorgesehen, die eine radiale Verformung der Gleitschale in Richtung gegen das Gehäuse ermöglichen, um dadurch herstellungsbedingten Kantenverdickungen an den innenliegenden Nuten entgegenzuwirken. Bei der Anordnung nach DE 74 24 445 -U1-wird ein ähnlicher Effekt durch eine sehr dünne Gleitschalenwand und auf der Außenseite der Gleitschale angeordnete Rippen erreicht.

Mehrteilige Gleitschalen aus unterschiedlich elastischen Werkstoffen für Kugelgelenke sind aus DE-AS 10 14 441 bekannt. Kugelgelenke bei denen die Gelenkkugel in einem mit Flüssigkeit gefüllten Hohlkörper aus elastischem Werkstoff angeordnet ist, wurden durch die DE 35 22 013 - A1- offenbart.

Durch die hohe Steifigkeit des für die Herstellung der Gleitschalen eingesetzten, wegen seine guten Gleiteigenschaften geschätzten Werkstoffes ist es unausweichlich, daß sich durch Toleranzen bei der Herstellung der Kugel, des Gehäuses und der Gleitschale schwankende Reibmomente ergeben, die an sich unerwünscht sind. Vor dem Hintergrund immer höherer Anforderungen an geringe Reibmomente bei gleichzeitig äußerst geringer axialer und radialer Einfederung bei hohen Belastungen sind neue Lösungen zu suchen.

Dementsprechend ist es Aufgabe der Erfindung, durch konstruktive Änderungen zum Toleranzausgleich eine Verringerung unvermeidlicher Reibmomente bei Kugelgelenken der eingangs genannten Bauart zu erreichen.

Die Erfindung löst diese Aufgabe durch eine Ausbildung mit den Merkmalen nach dem Kennzeichen des Patentanspruches 1.

Durch die Anordnung eines elastischen Werkstoffes auf der Außenkontur der Gleitschale wird ein Ausgleich der Toleranzen erreicht, ohne dadurch die Elastizität der Gelenkschale negativ zu beeinflussen. Bevorzugt wird eine Anordnung, bei der der gegenüber dem Werkstoff der Gleitschale hochelastische Werkstoff in einer sich wenigstens am Kugeläquator beiderseits der Äquatorebene erstreckenden Ausnehmung angeordnet ist. Durch die Erfindungsmerkmale kann eine kostenintensive Einschränkung der Fertigungstoleranzen vermieden werden. Der elastische Werkstoff läßt sich ringförmig oder auch nur partiell auf der Außenkontur der Gleitschale anordnen, wobei Ausdehnung und Querschnittsform der mit hochelastischem Werkstoff gefüllten Ausnehmung an die jeweilige Gelenkkonstruktion und an die zu erwartenden Betriebsbelastungen des Gelenkes angepaßt werden. Es ist besonders vorteilhaft, daß die Gleitschale weiterhin einteilig ausgeführt werden kann und somit die im langjährigen Betrieb gewonnenen vorteilhaften Ausbildungsmerkmale beibehalten werden können.

In der Zeichnung sind Ausführungsbeispiele der Erfindung dargestellt. Es zeigen:
- Figuren 1 bis 3: unterschiedliche Ausführungsbeispiele jeweils zur Hälfte in Ansicht und zur Hälfte in einem durch eine Achsebene gelegten Schnitt und
- Figur 4: einen durch eine Achsebene gelegten Schnitt eines weiteren Ausführungsbeispieles.

Das in den Ausführungsbeispielen dargestellte Kugelgelenk besteht aus einer an dem einen Ende eines Gelenkzapfens 1 ausgebildeten Gelenkkugel 2 und einem Gehäuse 3, in dem die Gelenkkugel 2 mittels einer Gleitschale 4 allseitig gleitend beweglich gelagert ist, wobei die Gleitbewegung zwischen der Oberfläche der Gelenkkugel 2 und der Innenfläche der Gleitschale 4 stattfindet. Das Gehäuse 3 umschließt mit einem Innenmantel den Außenmantel der Gleitschale 4 derart, daß sich die Gleitschale 4 radial gegen das Gehäuse 3 abstützt. Durch Befestigungsmittel 5 an dem Gelenkzapfen 1 ist dieser mit einem Fahrzeugteil verbindbar und durch Befestigungsmittel 6 ist das Gehäuse 3 mit einem anderen Fahrzeugteil verbindbar.

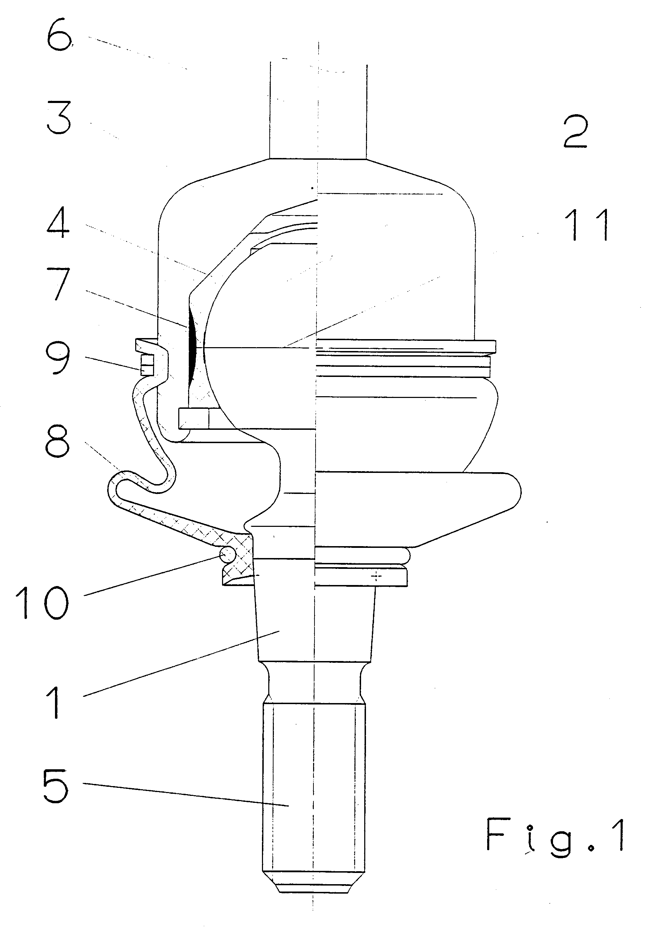

Zum Toleranzausgleich ist zwischen dem Außenmantel der Gleitschale 4 und dem Innenmantel des Gehäuses 3 ein gegenüber dem elastischen Werkstoff der Gleitschale 4 hochelastischer Werkstoff 7 in einer Ausnehmung angeordnet, die partiell oder umlaufend vorteilhaft am Außenumfang der Gleitschale 4 ausgebildet ist. In dem Ausführungsbeispiel nach Figur 1 ist dieser elastische Werkstoff 7 mit einem linsenartigen Querschnitt etwa im Bereich des Äquators 11 der Gelenkkugel angeordnet, so daß sich der elastische Werkstoff beiderseits der Äquatorebene erstreckt. Dabei kann sich der elastische Werkstoff 7 in Umfangsrichtung der Gleitschale über einen mehr oder weniger großen Längenbereich erstrecken, beispielsweise auch umlaufend ausgebildet sein. Die Form der den elastischen Werkstoff 7 aufnehmenden Ausnehmung läßt sich an unterschiedliche Gelenkkonstruktionen und deren hauptsächliche Betriebsbelastungen anpassen.

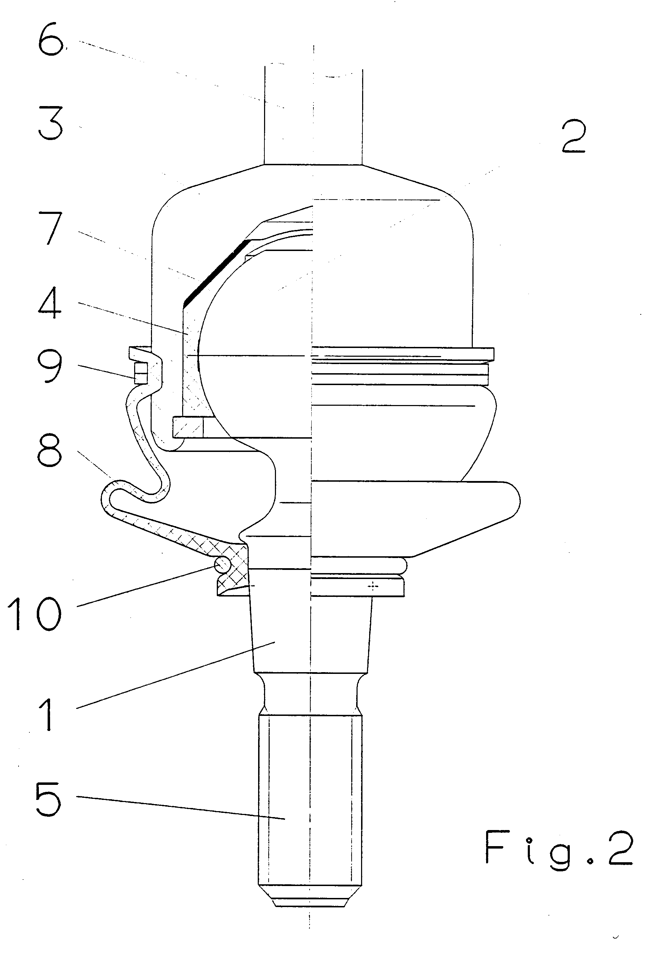

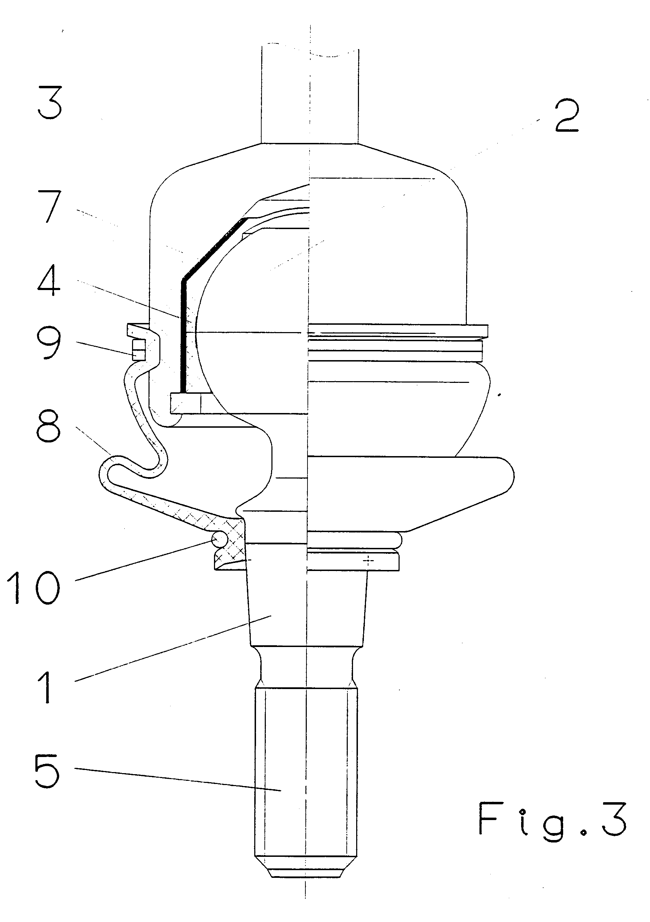

Bei dem Ausführungsbeispiel entsprechend Figur 2 handelt es sich um ein vorwiegend in axialer Richtung des Gelenkzapfens 1 belastetes Kugelgelenk, so daß der elastische Werkstoff 7 in einem Bereich angeordnet ist, in dem wesentliche Axialkräfte zwischen der Gelenkkugel 2 und dem Gehäuse 3 übertragen werden. Der elastische Werkstoff 7 ist als eine relativ dünne Schicht an bestimmten Stellen oder ringsumlaufend angeordnet. In Verbindung mit diesem Ausführungsbeispiel zeigt die Figur 3 eine Anordnung, bei der der elastische Werkstoff 7 sowohl im Bereich der zylindrischen Innenwandung des Gehäuses als auch im Bereich einer axiale Kräfte übertragenden Schrägfläche des Gehäuses angeordnet ist, um den elastischen Werkstoff sowohl bei radialen als auch bei axialen Gelenkbelastungen zum Toleranzausgleich wirksam werden zu lassen.

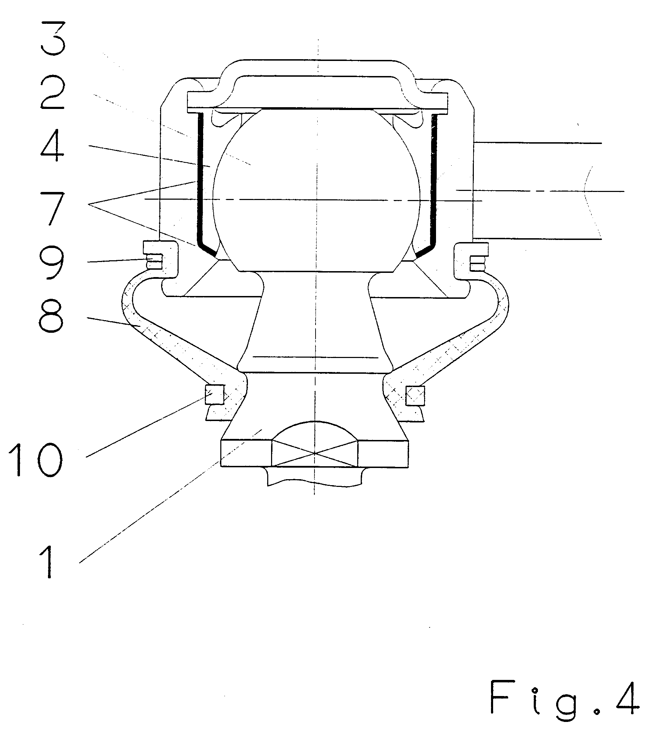

Eine gegenüber den Figuren 1 bis 3 etwas abgeänderte Ausbildung des Kugelgelenkes zeigt das Ausführungsbeispiel in Figur 4. Das Gehäuse 3 des Kugelgelenks umschließt mit einer zylindrischen Innenwandung eine zylindrische Außenwandung der Gleitschale, wobei sich zwischen den beiden zylindrischen Wandungen eine dünne Schicht 7 aus hochelastischem Werkstoff befindet. Bei diesem Ausführungsbeispiel kann der elastische Werkstoff 7 in Umfangsrichtung nur partiell oder umlaufend angeordnet sein.

Unterschiedlich ist bei den Ausführungsbeispielen die Formgebung des Gehäuses, des Kugelzapfens und der Gleitschale. Unterschiedlich ist auch die Ausbildung des Verschlußes zwischen der Gelenkkugel 2 und dem Gehäuse 3. In allen Ausführungsbeispielen wird der Spalt zwischen dem Rand der offenen Gehäuseseite, aus dem der Gelenkzapfen 1 herausgeführt ist, und dem Gelenkzapfen durch einen Dichtungsbalg 8 aus einem elastischen Werkstoff abgeschlossen, dessen wulstförmiges Ende einerseits mittels eines Federringes 9 oder dergleichen in einer Nut am Gehäuse und andererseits ebenfalls mittels eines Federringes 10 am Schaft des Gelenkzapfens 1 gehalten ist.

### BEZUGSZEICHENLISTE:

- 1: Gelenkzapfen
- 2: Gelenkkugel
- 3: Gehäuse
- 4: Gleitschale
- 5: Befestigungsmittel
- 6: Befestigungsmittel
- 7: elastischer Werkstoff
- 8: Dichtungsbalg
- 9: Federring
- 10: Federring
- 11: Äquator

## Patentansprüche

1. Kugelgelenk für Fahrwerksteile in Kraftfahrzeugen, bei dem eine an einem Gelenkzapfen ausgebildete Gelenkkugel innerhalb eines Gehäuses in einer Gleitschale aus Kunststoff gelagert ist, deren Außenmantel das Gehäuse mit einem Innenmantel eng umschließt und Ausnehmungen aufweist, dadurch gekennzeichnet, daß am Außenmantel der Gleitschale (4) wenigstens an Stellen erhöhter Belastung durch die Gelenkkugel (2) ein gegenüber dem Werkstoff der Gleitschale (4) hochelastischer Werkstoff (7) in einer Ausnehmung angeordnet ist.

2. Kugelgelenk nach Anspruch 1, dadurch gekennzeichnet, daß der gegenüber dem Werkstoff der Gleitschale hochelastische Werkstoff (7) in einer sich wenigstens am Kugeläquator (11) beiderseits der Äquatorebene erstreckenden Ausnehmung angeordnet ist.

3. Kugelgelenk nach den Ansprüchen 1 und 2, dadurch gekennzeichnet, daß der hochelastische Werkstoff (7) partiell an Stellen erhöhter radialer Belastung in Ausnehmungen am Außenmantel der Gleitschale (4) angeordnet ist.

4. Kugelgelenk nach den Ansprüchen 1 und 2, dadurch gekennzeichnet, daß der elastische Werkstoff (7) umlaufend in einer oder mehreren ringförmigen Ausnehmungen angeordnet ist.

5. Kugelgelenk nach Anspruch 1, dadurch gekennzeichnet, daß der elastische Werkstoff (7) hülsenförmig auf den Mantel der Gleitschale (4) aufgebracht ist und sich beiderseits der Ebene des Äquators (11) im wesentlichen über die Höhe der Gleitschale (4) erstreckt.
